# EUROPEAN PATENT SPECIFICATION

(11) **EP 3 013 595 B1**
(45) Date of publication and mention of the grant of the patent: **09.08.2017**
(21) Application number: 13736611.8
(22) Date of filing: 24.06.2013
(51) Int. Cl.: B42D 15/00, B41M 3/14, G07D 7/20, G06K 19/06, G06K 19/077, G07D 7/12, B42D 25/405

(54) **SECURITY CODING SYSTEM & MARKER, OPTOELECTRONIC SCANNER AND METHOD OF CODING ARTICLES**
SICHERHEITSCODIERUNGSSYSTEM UND MARKER, OPTOELEKTRONISCHE ABTASTVORRICHTUNG UND VERFAHREN ZUR CODIERUNG VON GEGENSTÄNDEN
SYSTÈME & AMP; MARQUEUR DE CODAGE DE SÉCURITÉ, DISPOSITIF DE BALAYAGE OPTO-ÉLECTRONIQUE ET PROCÉDÉ DE CODAGE D'ARTICLES

(43) Date of publication of application: 04.05.2016
(73) Proprietor: Gluco Technology Limited, Conwy LL22 8LJ (GB)
(72) Inventor: KEAY, Peter Jeffrey, Thetford Norfolk IP25 6NN (GB)
(74) Representative: Browne, Robin Forsythe
(86) International application number: PCT/GB2013/051655
(87) International publication number: WO 2014/207415

(56) References cited:
- WO-A1-01/54077
- US-A1- 2009 001 164
- US-A1- 2010 102 250

## Description

### Field of the Invention

This invention relates, in general, to a security coding system and marker and is particularly, but not exclusively, applicable to both a method and system of coding articles for validation and tracking purposes and an optoelectronic scanner.

### Summary of the Prior Art

Fraud arising through the misrepresentation of counterfeit goods as genuine articles is significant commercial problem. For example, the supply of illicit pharmaceuticals that purport to comply with regulatory standards (when in fact they are fakes) presents a real likelihood of harm being caused to an individual. Likewise, the supply of a counterfeit part for a mechanical device jeopardizes the mechanical integrity and safety of a device into which the counterfeit card is installed.

For some considerable time, universal product codes (more frequently referred to as 1D (linear) or 2D (patterned) "barcodes" and sometimes referred to by their acronym, UPCs) have been applied to articles of manufacture and retail to permit tracking and auditing of stock. Such barcodes comprise an array of bars of varying width that machine readable, albeit that an alphanumeric portion is usually also included. Scanning across the width of the bar code therefore permits the generation of square-wave profile representative of binary values, with the separation between lines and the line width representing an extended sequence of one or other of a binary "0" or binary "1". However, conventional linear barcodes can be wantonly replicated and applied to packaging and thus provide no guarantee that the actual article is *bona fide.* Consequently, even though illicitly applied barcodes are scanned at either a warehousing stage and/or the point-of-sale (PoS), the underlying lack of uniqueness and their ease of replication mean that no effective information about the articles history, provenance and/or authenticity can be gleaned, especially since cross-referencing of the barcode is generally only into a local database that lists what is expected to be present under that specific barcode.

More recently, high capacity colour barcodes (HCCB) has been introduced to augment the basic UPC. HCCBs use a grid of colored CMYK (cyan-magenta-yellow-key) triangles to encode additional data. Depending on the target use, the grid size (total number of symbols), symbol density (the printed size of the triangles), and symbol count (number of colors used) can be varied. HCCB can use an eight-colour and four-colour palettes for high density encryption of data, although a two-colour (i.e. black-and-white) palette is also available. Like conventional linear barcodes, HCCB can be read and decoded using mobile camera-phone technologies. Often, HCCB provides a web-link that directs the user's mobile browser to an appropriate website, with this redirection providing a limited tracking function arising from server access and handshaking with the active device sending the web request.

Where black & white bar codes limit coding to a binary 0 or 1 for each recovered symbol, using four colors allows 00, 01, 10 or 11 coding to be represented by a single symbol. Triangular symbols are used in HCCB since they are more space efficient. Assuming each symbol/triangle represents two bits and an HCCB tag has 5 rows of 10 symbols (i.e. 50 symbols = 100 bits), such an HCCB 2D code can store 12.5 bytes. However, the final four symbols/triangles are always the same and define the reference 'palette' for the tag. This reference palette is provided to ensure that even in poor colour/lighting/contrast conditions the decoder can differentiate between YMCK colours based on the reference.

Customs Authorities have also made use of colour-coded labels (called "duty stamps") that are (upon request) manufactured and supplied to a distillery (or the like) for application to spirit bottles that are subject to retail sale. These duty stamps include an intricate design having an alphanumeric code unique to the manufacturer, exporter or importer of the spirit. When affixed to the bottle, the duty stamp indicates that relevant exchequer duty/taxation has been paid for the specific liquor within the bottle (as manufactured by the identified distillery). The duty stamp, often seen in the form of a magenta-coloured circular motif, also includes an invisible fluorescent yellow ink and a UV varnish containing a security feature, with the motif fluorescing under broad spectrum ultra-violet (UV) light to allow immediate (but basic) visual inspection that supposedly collaborates the label/duty stamp's authenticity.

Other industries are also security conscious and have applied a variety of coding schemes to identify counterfeits. Perhaps the most prevalent is banknote paper, where it is not uncommon for unique serial numbers (as well as other anti-forgery devices, such as watermarks and micro-printed threads) to be augmented by coloured silks, fluorescing security threads and/or planchettes incorporated into the banknote's substrate. Under UV light inspection, these silks and planchettes (as well as the inherent properties of the paper) provide a fluorescing wideband spectral profile that provides a spectral signature for identifying forgeries. Reference is made to the internet article "Fluorescence Detection of Counterfeit US Currency" attributed to Jasco, Inc. which discusses banknote authentication by identifying properties of banknote materials (see http://www.jascoinc.com/Libraries/Product Spec Sheets/FP 01 02.sflb.ashx).

However, in most instances, the cost of detectors (especially highly sensitized spectrometers capable of resolving subtle differences in properties) is prohibitive and thus limited in application to banks and centralized money counting rooms, such as those in cash offices and casinos.

Furthermore, the idiom "familiarity breeds contempt" is also relevant in subjective assessment and validation. Specifically, so long as initial inspection passes muster, detailed examination is seldom exercised when purchasing products and/or inspecting articles or commerce or currency. Particularly, consumers seldom undertake detailed analysis, so as long as the article looks right (or appears to have the right colour change, e.g. a duty stamp fluorescence under applied UV light or the right feel and general look, such a £50 note) greater examination may be forsaken to the cost of the recipient. Another classic example relates to purchases of boxed perfumes where a market trader might use a small sample of an original scent to secure a transaction, with the fake presented in a box that has a "get-up" purporting to be associated with the genuine fragrance albeit that the actual liquid content is a pale imitation of the original.

Conversely, even if a customer receives or purchases a higher value good (or high denomination banknote, such as a €500 note), while some degree of skepticism might initially be present and a nagging doubt may always remain, the fact that the commercial good or note is actually in commercial circulation presents a self-fulfilling prophecy! In other words, a lack of familiarity can also lead to customer acceptance (however misguided), especially when no form of test is easily available and the general context of purchase or acquisition is genuine or appears genuine! The idiom attributed to Abraham Lincoln is therefore also applicable: "You can fool some of the people all of the time, and all of the people some of the time, but you cannot fool all of the people all of the time".
Therefore, in general, counterfeits (whether commercial articles, forgeries or monetary currency) can be introduced into the existing market space and circulated for a considerable period before any question is raised about their authenticity and/or origin. A quick, robust and secure test for authenticity is therefore desirable.

Patent document US 2010/102250 A1 discloses a security marker having preselected colour features which produce known spectral signatures under certain incident radiation wavelengths.

### Summary of the Invention

According to a first aspect of the invention there is provided a coded security marker containing one or more preselected colour features having known and preselected spectral characteristics knowingly discernible under incident narrowband electromagnetic wavelengths selected from a range between about middle/near ultraviolet to about near infra-red, the spectral characteristics producing a unique and known spectral signature knowingly attributed to the security marker.
In another aspect of the invention there is provided an article of manufacture including a coded security marker containing one or more preselected colour features having known and preselected spectral characteristics knowingly discernible under incident narrowband electromagnetic wavelengths selected from a range between about middle/near ultraviolet to about near infra-red, the spectral characteristics producing a unique and known spectral signature knowingly attributed to the security marker.

In a further aspect of the invention there is provided a method of coding and authenticating an article of manufacture, the method comprising: coding the article and/or its packaging with a first coded security marker containing one or more preselected colour features realizing a first spectral signature; establishing a relationship between the spectral signature against the article by recording an association; using selected narrowband electromagnetic wavelengths selected from a range between about middle/near ultraviolet to about near infra-red, illuminating a second coded security marker associated with a test article presented as being the article of manufacture; recovering spectral characteristics arising from illuminating the test article to produce a second spectral signature; comparing the second spectral signature against the first spectral signature; and generating an alert in circumstances where the comparison of the second spectral signature against the first spectral signature yields statistically significant dissimilarities between the spectral signatures, otherwise accepting the second spectral signature as being the first spectral signature.

The one or more preselected colour features describe at least one of: a point of origin the article; an expiry date for the article; manufacturing details for the article; and/or distribution details relating to the shipping and/or storage of the article.

In yet another aspect of the present invention there is provided an optoelectronic scanner system comprising: an array of multiple narrowband electromagnetic sources arranged to produce, on a time-controlled basis, a plurality of narrowband electromagnetic wavelengths selected from a range between about middle/near ultraviolet to about near infra-red; a lens system cooperating with the array of multiple narrowband electromagnetic sources and arranged to capture spectral response characteristics.

In a preferred embodiment, the optoelectronic scanner further includes an image capturing device at a point of focus of the lens system, the point of focus being behind or alongside the array, the image capturing device compiling the spectral response characteristics from photons emitted from the array on the time-controlled basis and as reflected, in operation and via the lens system, from a surface of a sample containing a colour-coded marker.

In yet another aspect of the present invention there is provided a detector for detecting a security marker having optical properties, the handheld detector comprising: an arrayof multiple LED sources arranged to produce, upon selective energization, triggering electromagnetic wavelengths in about the near infra-red range, the triggering electromagnetic wavelengths focused near an aperture of the detector; an IR mirror mounted in the detector and held inboard of the array of multiple LED sources, the IR mirror mounted in-line with the aperture and in a reflected wavepath, the IR mirror configured to transmit visible wavelengths therethrough and to block triggering electromagnetic wavelengths falling incident thereon; and a visible light detector configured to detect light intensity for visible wavelengths falling incident thereon, the visible light detector positioned in the reflected wavepath and behind the IP mirror with respect to the aperture, the light detector providing an output representative of said detected incident visible light intensity; a comparator for comparing said output representative of said detected incident visible light intensity with a predetermined threshold light intensity level, the comparator configured to generate a comparison output; and an alert, responsive to the comparison output, for generating a sensory perceivable alert relating to at least one of the presence or absence of the security marker as determined by the presence or absence of visible wavelengths generated in timely response to triggering electromagnetic wavelengths produced from the array.

Advantageously, the coding scheme of the various embodiments of the present invention provides a secure and covert or overt mechanism capable of authenticating and/or tracing articles of commerce (including banknotes) to which the coding scheme is applied. The coding scheme can, in fact, be used with existing scanning equipment (or dedicated portable optoelectronic scanners), with software-implemented detection algorithms updateable to maintain coding integrity. A system having access to a database is thus able to provide near-instantaneous authentication of a coded sample.

The method of coding is extremely robust, but easily applied in a multitude of applications, including banknote processing, stock tracking and/or stock authentication. Detection and authentication of the coded marker is also relatively simple and straightforward (provided that one understands the initial coding conditions or has access to a preferably encrypted decoding key).

Beneficially, the scanner and reader are relatively simple in their construction and thus relatively inexpensive to manufacture. Indeed, the scanner can be provided as an adjunct to existing cameraphones, whilst an optical detector can be realized by a pre-existing CCD array (or the like) within the cameraphone (provided that the CCD array is capable of detecting and differentiating the spectral characteristics that result from analysis of the sample) and the reader effected by a software upgrade.

In general, the invention provides a unique and counterfeit-proof system that involves the use of pantone printing inks and fluorescent inks. Also unique and printable transparent plastic materials can be part of the security system as packaging materials or transparent materials with bonding capabilities which are either intrinsically identifiable spectroscopically or which can contain an immediately identifiable coded marker which can be used for coating or wrapping products or as bonding labels which also contain unique and counterfeit-proof markings onto products.

Over time, the security marker may be changed to include different coded markers and/or the characteristic spectral signature (made up from individual wavelength components) can be altered so as to require an update in detection software. For example, an expiry date may be coded into the reader, with an expired or time-limited product identified by the lack of authentication of a specific spectral signature. Expiry coding is of particular relevance to the food, drink and pharmaceutical industries, although it can be applied to any time-limited or perishable product.

Moreover, subtle changes of the spectral markers incorporated into the coded marker beneficially permit point of origin tracking and or identification of specific manufacturing batches. Origin identification is of relevance to any major manufacturer with sites distributed on a national or worldwide basis, or in the context of identifying counterfeits. Point of origin identification can support quality control through the ability to differentiate identical products from the perspective of point of manufacture, especially where different batches may be centrally stored or where products are supplied over time to a common retailer. Equally, coding and analysis according to the various embodiments of the present invention can be specific to a particular POS outlet, location or country. In fact, it is foreseen that the colour coding scheme (and the scanner) can be used as a routing tool with the colour coding identifying an end point and automated detection used to generate address labelling or directions.

The coding and detection system may provide authentication for paper-based products, cards and packaging materials for wrappings. When used as part of foodstuffs, clothing, electrical or mechanical goods and the like, the coded security marker may be applied to labels, packaging and accompanying booklets. In this way, the overall system can be used to protect against the fraudulent copying of designer or consumer goods.

Accordingly, the use of an admixture of spot colours and/or fluorescent inks in a logo or design can easily be changed through the print order of colours or design, with the colours carrying security and track and trace information. Literally billions of designs and colours are available, so application of the security marker can, if desired, be a one-off or short-lived process or otherwise applied to batches of articles for distribution, use or sale. Indeed, the numbers of levels of security which are available make it cost- and time prohibitive for the fraudster to attempt to repeat.

### Brief Description of the Drawings

Exemplary embodiments of the present invention will now be described with reference to the accompanying drawings, in which: is
FIG. 1 shows a typical graph of normalized intensity plotted against wavelength for a coded marker of a preferred embodiment of the present invention;
FIG. 2 is an exploded component view of an optoelectronic scanner according to a preferred embodiment of the present invention;
FIG. 3 is a schematic representation of the scanner of FIG. 2;
FIG. 4 is a light-ray diagram showing propagation of light through a typical lens system employed within FIGs. 2 and 3;
FIG. 5 is a block diagram of a preferred system, including an article of commerce and a scanner shown *in situ*;
FIGs. 6a and 6b in combination describe a flow diagram of a process for generating, applying and authenticating a code marker, the process and code marker in accordance with preferred embodiments of the present invention;
FIG. 7 is a preferred coded marker produced using the coding scheme and process of FIG. 6; and
FIG. 8 is a schematic diagram of a preferred handheld detector device for authenticating the presence of a covertly applied colour marker.

### Detailed Description of a Preferred Embodiment

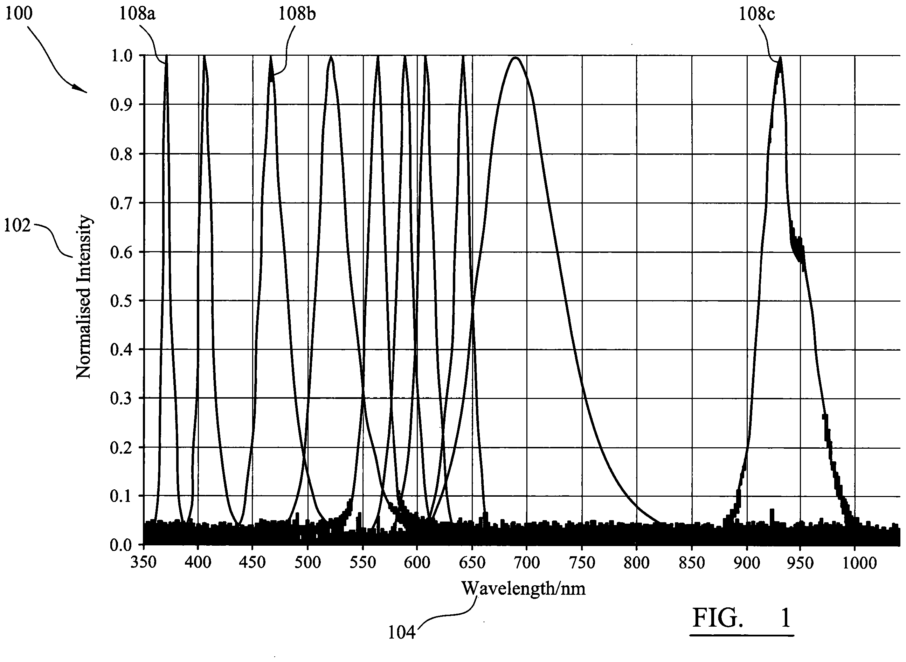

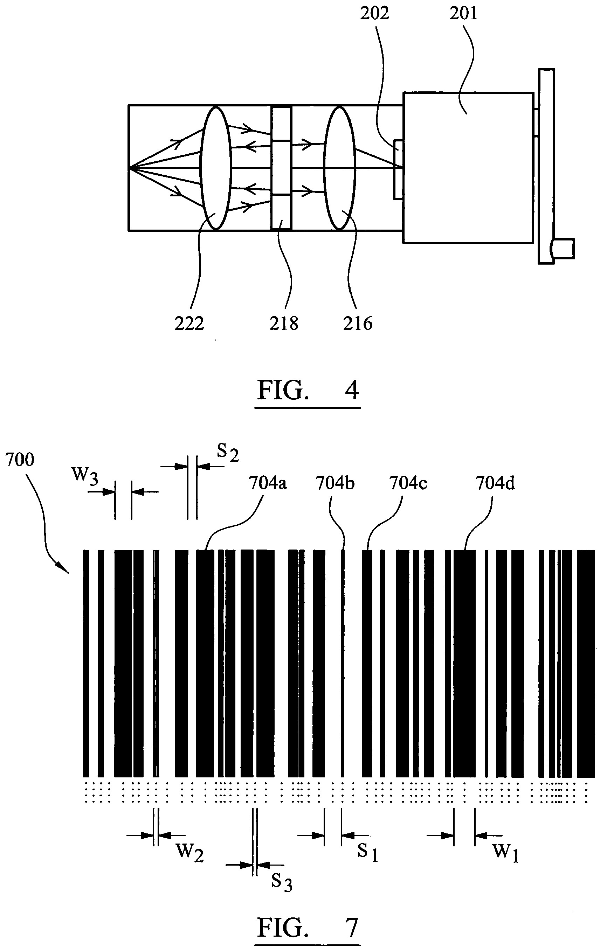

Referring concurrently to FIGs. 1 and 7, a coding marker of a preferred embodiment of the present invention and its spectral signature are shown.

Specifically, FIG. 1 shows a typical graph 100 of normalized intensity 102 (ordinate axis) plotted against wavelength 104 (abscissa) for a coded marker 700 of FIG. 7. In FIG. 7, the coded marker 700 is shown in the exemplary form of a coloured linear barcode containing a multiplicity of spaced apart vertical lines 704a-704d of varying widths and varying (but pre-selected colours). Typically, the coloured marker will include at least two different colours (such as red and blue), preferably at least four different colours (across the visible colour spectrum) and possibly tens of different colours that includes different hues that may be regularly, irregularly and/or closely spaced in the spectrum. The number of colours is a design choice, but selected to be sufficient to provide a meaningful result for analysis and confidence, as will be described below. In the exemplary case of FIG. 7, only four colours are expressly identified with reference numbering, although the barcode actually (and generally) includes many.

The general nature, configuration and representation of black and white or HCCB barcodes is known from the perspective of data recovery, so it will be understood that patterns employed in the preferred embodiment are not restricted to vertical lines. Associated barcode numbering (not shown), whether Arabic or alphanumeric, may be optionally included in the coded marker 700, the numbering in a conventional coding format. The use of linear colour-coded bar codes does offer some benefit, since optionally differing bar widths w₁-w₃ and/or optionally differing separations s₁-s₃ can also be used to convey information, as is known.

In a preferred embodiment, the vertical lines 704a-704d are coded and presented to include specifically selected coloured features. The coloured lines 704a-704d may, in fact, be the entire bar or vertical line, or may be only a portion of each vertical line 704. The colouration need not take the form of bars in barcode, but instead may be realized by other coloured features or patterns. Consequently, the skilled addressee will appreciate that the term "coloured line" will be broadly understood to include any discernible coloured features that

The coloured features 704a-704d are realized by:
i) pigments;
ii) dyes;
iii) coatings (whether organic or inorganic); and/or
iv) coloured species from natural sources which are coloured or can be made to change colour, such as aqueous extracts from lichens (litmus) and certain yeasts;
   or
v) combinations thereof.

The coloured features, however produced or manufactured, therefore share a common characteristic in that they each have specific, narrowband spectral responses that are known and selected for the coded marker 700. More especially, each specific coloured feature 704a-704d provides a relatively narrowband response for specific incident wavelengths of electromagnetic radiation, with each narrowband response spectral response contributing to generate a quantifiable spectral fingerprint for the marker 700.

Each specific coloured feature 704a-704d may, in fact, be built up from a mixture of one or more pigments, dyes, coatings or coloured biological materials assembled as a multicomponent or multi-layer structure. Interaction with a narrow range incident of wavelengths (rather than a precise wavelength or a broadband signal) produces an identifiable spectral profile (rather than an absorption line-like response or no easily discernible response, respectively) arising from the light emission properties of the components that make up the marker of each coloured feature.

Looking specifically at FIG. 1, the incident electromagnetic radiation that triggers a measureable spectral response (which may be a normalized value) in each coloured feature 704a-704d will typically be in the middle/near ultraviolet to short/near infra-red wavelength range, i.e. from about 300nm to about 1000nm. For example, a first coloured feature 704a may produce a principal narrowband spectral (intensity) peak 108a at about 370nm, the spectral peak being significantly larger (preferably at least double if not 5x and preferably a factor of ten larger) than an intensity measurably recovered from incident electromagnetic radiation that is off peak by more than about +/-50nm and generally greater than +/-25nm. A second coloured feature 704b may produce a corresponding second spectral (intensity) peak 108b focused around 470nm. In a similar fashion to the first spectral profile about the first peak, measured intensity (for example) drops off either side of the second peak because of the colour properties of the constituent dyes, inks and pigments. A third coloured feature 704c may produce a reverse Stokes' spectral response having a peak 108c in the near infra-red (based around 930nm). FIG. 1, in fact, shows several peaks and characteristic marker profiles associated with different excitation wavelengths that selectively illuminate the "coloured" features within the coded marker 700.

The reader/scanner is preferably constructed so that the intensity of each LED is as near as possible the same, i.e. to provide a flat-lined power output across all wavelengths. Each colour bar will have characteristic properties dependant on the characteristics of each LED. The final composite and characteristic fingerprint (i.e. the compiled spectral signature for the coded marker) will result from a totality of the illuminations by each LED and the resultant individual colour spectra.

Given that the coded marker 700 may, in fact, include multiple coloured features providing resolvable and distinct measurable responses (such as normalized intensity) having a narrowband profile, meaningfully significant measured constituent spectral events are produced by impinging electro-magnetic radiation from one (preferably at least two or more), incident narrowband electromagnetic source(s) onto one (or preferably multiple) colour-coded features (in the coded marker 700) allowing the generation of a unique composite spectral signature that defines the coded marker 700. Multiple selected spectral peaks (or troughs, as the case may be), each discrete, can also be used as a fingerprint without superimposing their wider spectral profiles in order to produce a wideband spectral signature over the range of applied irradiating wavelengths from the selected narrowband light sources. The use of LEDs is preferred because they are relatively low cost and, based on their physics, have a pretty narrow operating bandwidth of generally less than 10nm and typically less than 5nm for specific semiconductor combinations. Using colour-specific LEDs avoids the complication of complex white light splitting devices, such as prisms, gratings, etc., and related lens and mirrors. Further, more specific LEDs become available, the resolution of the reader can, if necessary, be improved. Clearly the ultimate resolution would be achieved by a continuously tunable laser (or the like) having a 1nm resolution, but a low-cost solution is better to support broad commercial access and use.

The use of pantones, fluorescent printing inks and/or combinations thereof to form unique spectral signatures is desirable because pantones, for example, do not easily lend themselves to replication by conventional image copiers using conventional toners or inks. Consequently, the use of selected pantone and/or fluorescent coloured features in the coded marker 700 provides a unique fingerprint which is difficult or impossible to replicate, with the resulting spectral fingerprint controllable and manipulable by modifying the selected inks and the updating reader analysis software. Specifically, since the colour-coded features in the coded marker 700 are pre-selected and their spectral characteristics known with respect to incident narrowband radiation in the middle/near ultraviolet to near infra-red wavelength ranges, a detector geared to measure the reflected or absorbed light intensity permits a software-based comparison of the measured spectral components against the expected (i.e. known) spectral characteristic. For example, a mix of fluorescing pigments and/or pantones gives a quantitative measurable result or value from scanning and progression across the colour/em spectrum.

Printed images using pantones and/or fluorescing agents are not easily replicated using standard coloured printing techniques which, for example, making use of red, green and blue/black (RGB) or CMYK rendering processes. Indeed, the preferred embodiment leverages the uniqueness arising from the spectral profiles that are assembled when narrowband radiation in the appropriate wavelength range falls incident on deliberately inserted coloured markers having known spectral response properties. Inks, pigments and dyes used in the various embodiments are preferably not freely available or "off-the-shelf products, but, ideally are custom-ordered. Indeed, it is preferred that the inks, dyes and pigments used in the security application of the various embodiments cannot be scanned or photographed thus thwarting attempts to get the scanner to provide a positive identification which would be false.

As explained, the physical nature of the feature 706a-706d (i.e. the length of each vertical line, or some other shape, pattern or entirely recognizable image) is, by and large, subordinate to the "colour" coding that provides its unique identifying properties and overall spectral signature. In a preferred embodiment, the colour-coding may be permanently visible, although this need not be the case and the spectral narrowband peaks (based on identified wavelengths) may only be revealed under particular incident wavelengths.

The coded marker 700 can be applied directly (e.g. a printed image, especially on the context of paper-based products and articles) onto a packaging material, or a product (such as a box, metal component, glass bottle, label, ticket or banknote) or may be integral to packaging materials. Alternatively, the coded marker 700 can be printed on an adhesive label (or the like), with the label then permanently affixed (e.g. glued, stitched or heat-sealed) onto an article. The actual markers used in a security image can be visibly coloured or invisible to the naked eye or could include a combination of optically visible and invisible coded features. The term "coloured" should therefore be understood to reflect the unique properties provided within the coded marker by the inclusion of pigments, dyes or biomaterials employed and the "colour" is only "seen" as a spectral response by the optoelectronic reader at the point of examination.

In a preferred embodiment, the coded marker is printed onto plastic-coated UV dull paper or plastic film, the pigments and dyes being integral to the plastic through prior incorporation in the manufacturing process using either physical or reactive processing methods. Here, "plastic" is taken to mean a synthetic or natural polymer whether it actually be thermoplastic or thermosetting. Again, the security features may manifest themselves at visible or non-visible wavelengths. Inks (and the like) can be applied using standard printing techniques, i.e. wet offset (litho), dry offset, letterpress, screen, flexo and gravure processes.

Visible markers permit the informed general public to request or undertake authentication of the product, whereas the use of invisible markers provides a covert security regime that is generally non known or understood by the public at large.

It has further been appreciated that reactions between inks and substrates such as paper or polymers applied using any given printer is unique. In other words, it has been realized that the same signature formed with a different printer or on a different paper or polymer can yield a "fail" authentication result. This is significant as attempts at forgeries and counterfeits using different substrates or a different printer will often lead to the response of "fail" from the optoelectronic reader of the preferred embodiment.

In a preferred embodiment, since each marker may include multiple colour features, some of these may be deliberately spurious and thus unnecessary for authentication purposes.

Preferably, the illumination of the coded marker 700 makes use of a sequential step-through of distinct wavelengths. In a preferred embodiment, the step-through thus generates a plurality of spectral peaks of different intensity. From a decoding and authentication perspective, it is envisioned that all or only some of these spectral peaks are relevant for generation of an effective spectral signature. If only selected spectral peaks are employed, at the point of scanning and decoding a fraudster would need to understand the exact subset to authenticate the market code, thus increasing the level of complexity that has to be understood to fool the security system.

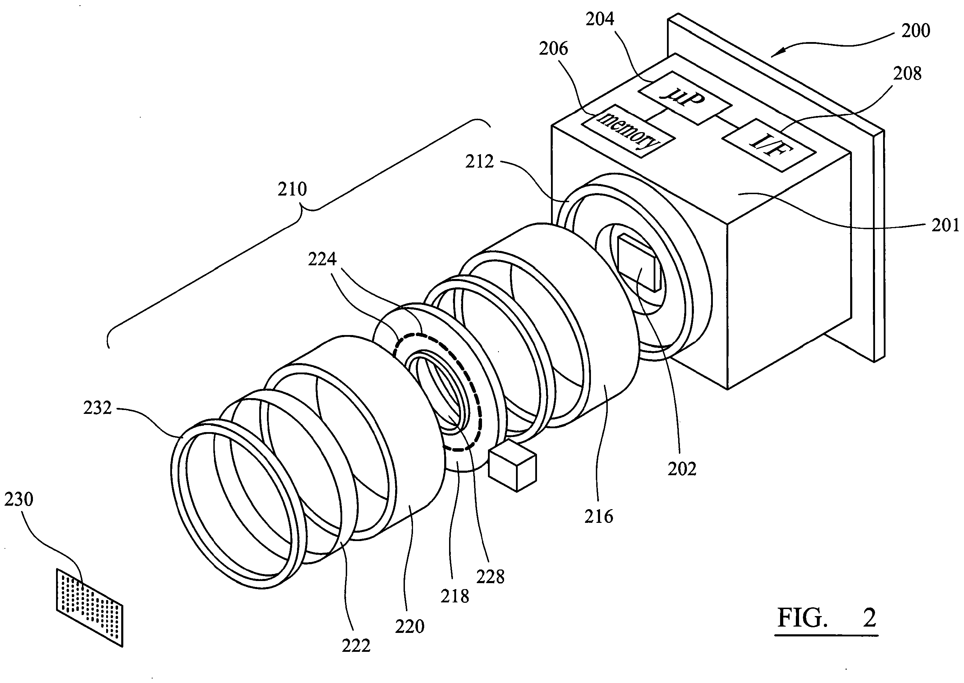

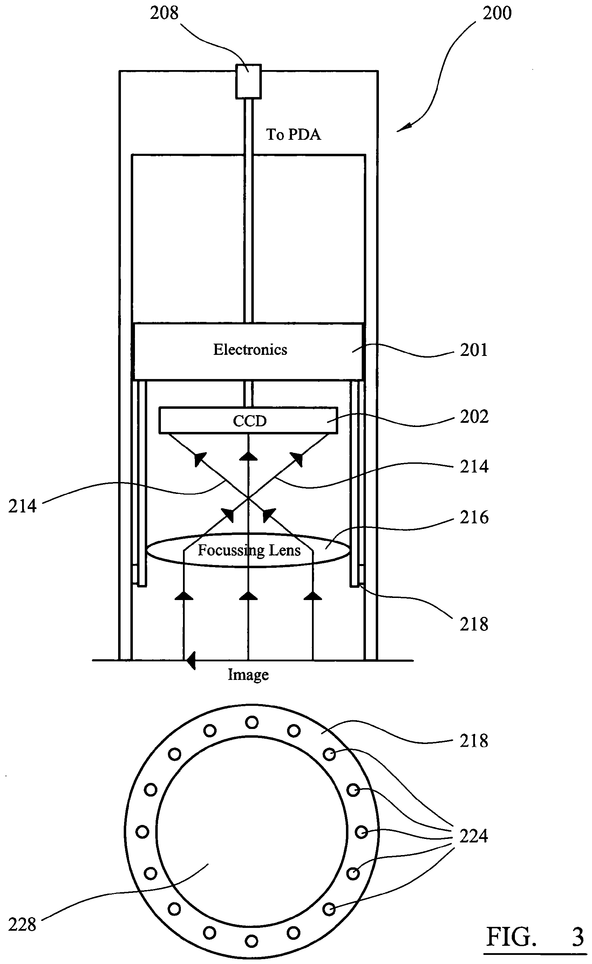

FIGs. 2 and 3 show schematic and exploded component views of an optoelectronic scanner 200 according to a preferred embodiment of the present invention. FIG. 4 shows a light ray diagram showing propagation of light through the lens system 210.

The scanner 200 includes a micro-processor as the processing engine 201 configured to resolve and assess image data captured by a charge coupled device (CCD) array 202 (or the like). The processing engine 201 typically, therefore, includes a microprocessor 204 coupled to a memory 206 that stores executable code for controlling the operation of the scanner and, particularly, authenticating spectral components by comparison of normalized values against a predetermined (and stored) standard for at least one (but generally a multiplicity) of coded markers 700. The processing engine may, in fact, be supported almost entirely by an existing PDA (or smartphone), with the amount of functionality traded-off against potential manufacturing costs and independent operation of the scanner.

To permit access to a remote database, server (not shown), or otherwise in order to render a result, an interface 208 (for the processing engine) is in operational communication with the microprocessor. The interface 208 may, therefore, take the form of a connection, such as wireless or Ethernet-like or USB connection and/or include a graphic-user interface having a display.

The processing engine 201 may be realized by functionality in an existing telecommunications device, such as a smartphone with a lens system 200, and coupled to the processing engine through suitable mounts 212.

The lens system 210 includes a CCD imaging lens that focuses light rays 214 onto the CCD array 202. A CCD image focusing lens 216 is placed in front of the CCD array 202. An LED ring 218 is mounted between the CCD imaging lens 216 and a lens holder 220 positions a sample imaging lens 222. The LED ring 218 is operationally responsive to the processing engine 201 in such a way that illumination of selected LEDs is controlled. The LEDs produce narrowband light across a range of wavelengths covering a significant spectral range between about 300nm to about 1000nm. Of course, the spectral range of LEDs in the scanner is entirely dependent upon the spectral characteristics of the coloured features, with the scanner preferably designed to make use coding within this entire range. When feature coding of the colour markers is restricted, then a corresponding restriction for illuminating LEDs can also be realized in the scanner.

The number of LEDs 224 in the LED ring 218 is a design choice, although it is expected that the ring will include at least ten circumferentially-positioned LEDs surrounding a circular orifice 228. The LEDs may be paired or batched in other ways in order to have wavelength outputs that are equally spaced across the useable spectrum of the coding scheme and scanner. The arrangement of the LEDs is mainly subject both to available physical space within any device design and considerations relating to the emission of electromagnetic radiation and the effective illumination of a sample 230 placed in front of the sample imaging lens 222. Multiple LEDs may be illuminated simultaneously to provide uniformity in lighting of the sample 230, if desired.

A lens retainer 232 operates to secure the sample imaging lens 222 into the lens holder 220. The lens system is preferably arranged to have a fixed focus and a focused image for the light detecting array 202.

In operation, the microprocessor causes selective illumination of the LEDs (or another suitable narrowband light source), with the intensity of absorption/reflection from the sample 230 detected by the CCD array 202 and processed into a meaningful spectral signature for output. Illumination can be timed so that the image is illuminated or sequentially flashed in millisecond bursts to build a picture of the image according to the properties of the colour features 704a-704d being interrogated. The CCD 202 will, therefore, measure one or multiple analytes arising from one or more different wavelengths at random or defined positions on the CCD array 202.

A preferred embodiment makes use of LEDs as light sources since these components are low power, have good life-expectancy and provide tiny, but very bright, light sources offering high intensity light with highly specific wavelengths. The resulting light source is thus able to illuminate a complex one or two dimensional mini or micro image.

Reflections collected from the image and particularly its coloured security features 704a-704d make use of micro lenses of high quality quartz or glass, with the lenses generally having a short focal length similar to that in a mobile phone camera or optical fibre technology. The lens system 210 is therefore arranged to focus the image, upon its illumination, onto the CCD array or the like. Images from the security marker 700 are therefore collected, stored and progressively built-up for analysis and comparison.

The location of the CCD device may be alongside the emitting array, with FIG. 2 showing a preferred configuration which benefits from being relatively slim in design. It will be understood that the location of the CCD 202 is functionally determined based on the ability to capture the reflected spectral characteristics/photons from the security image.

The exact configuration of the scanner may, in fact, vary from that shown in FIGs. 2 and 3, as will be appreciated by a skilled addressee. However, in general, the scanner reduces to a light source and lens system, while a complementary reader realized, for example, by a conventional personal digital assistant (PDA) running graphical and secure complex programming that processes an image for security analysis purposes. With the processing engine undertaking analysis, the scanner reduces to a very basic optical system with minimum electronics; this means that the scanner can be sized to be little more than that of a fountain pen, with the scanner coupled to the processing engine through a USB connector (or its equivalent).

The scanner's configuration (i.e. both the optical and processing parts in combination) may, however, also be used in other colour detection application, such as histo-chemical analysis where a colour change is brought about by a chemical reaction between a sample and a reagent, such litmus paper (and related materials) or specially bred yeasts to toxins and other species in gases and liquids. It is also applicable to numbers of colour changes which can be induced in a variety of materials by physical or chemical stimuli, such as: i) polymethylmethacrylate which produces colour changes visible using polarized light filters; and ii) thermochromic materials in response to temperature change. Other physically induced colour changes, e.g. arising from applied pressure or induced stress, may be measured by the scanner and reader combination of the preferred embodiment.

For a portable scanning unit, it is envisaged that CMOS will be the likely receptor for the spectral image because its power requirements are advantageous over currently existing technologies and its resolution is now considered as good as the equivalent CCD array; the nature of the detector array is therefore a design choice based around cost and resolution.

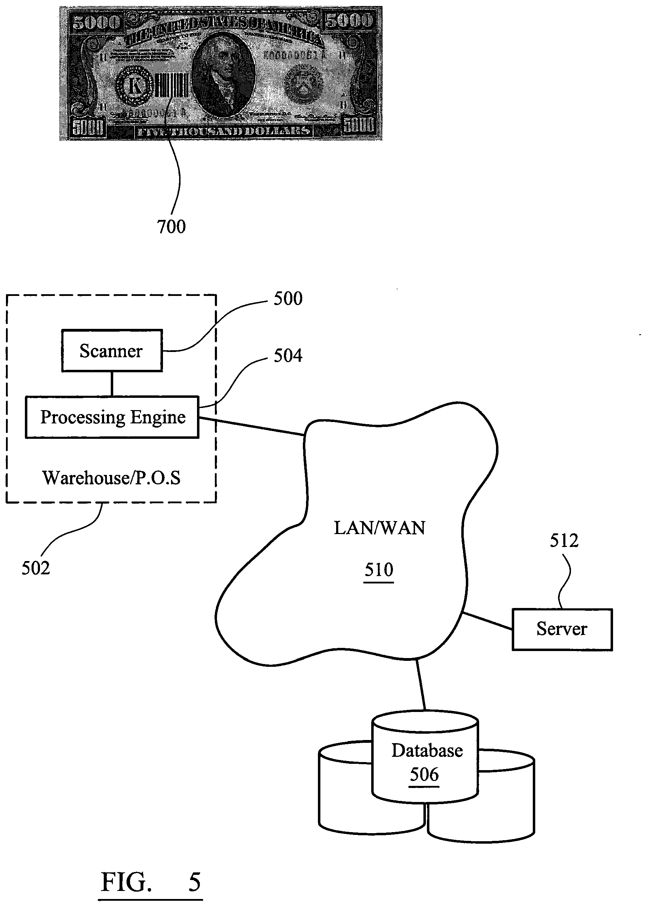

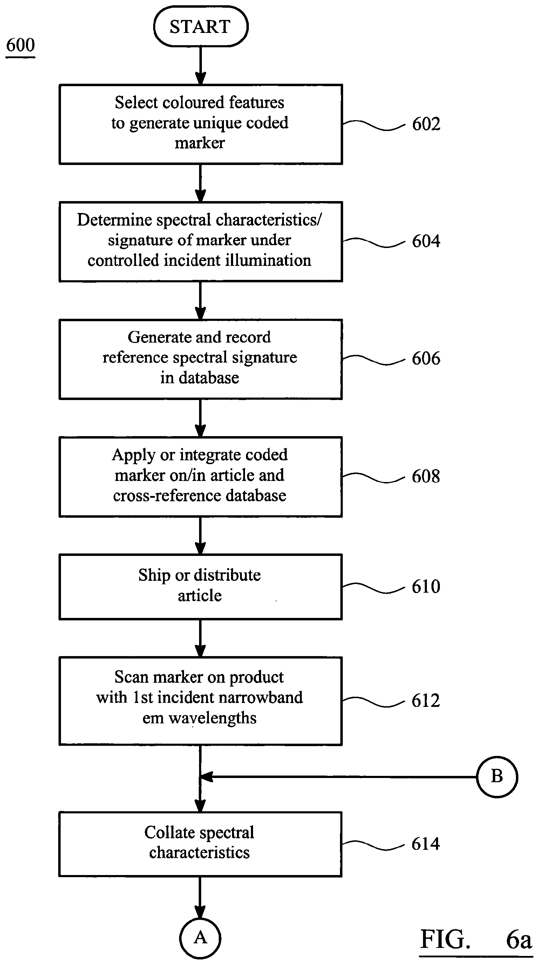

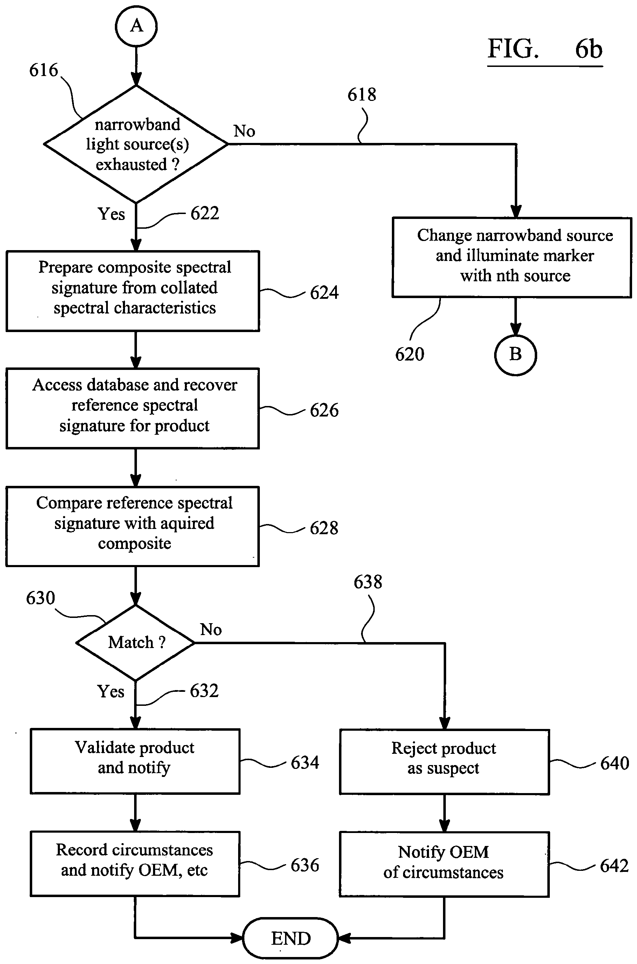

FIG. 5 is a block diagram of a preferred system, including an article of commerce and a scanner shown *in situ.* A scanner 500 (which may be a portable scanner as shown in FIG. 2) or a fixed unit integrated into a cash-machine at a point of sale, warehouse or bank 502 includes a processing engine 504 configured or arranged to assess likenesses in coded spectral signatures (as discussed above and as further explained in relation to the process of FIG. 6 below). A database 506, which may be remote to the processing engine 504, stores reference spectral signatures. In a remote scenario, the database 506 may be coupled to the processing engine via a local area network (LAN) or wide area network (WAN) 510.

If necessary, a server 512 permits re-programming of the processing engine with updated and securely protected software that directs the scanner 500 to apply selected narrowband patterns that change with time or which can be changed in response to a particular security being compromised or deemed compromised. The server (of FIG.5), therefore, represents the client's point of coding and where reference spectral analysis of selected colour codes for the coded marker is initially undertaken.

For example, in the event that fake products are detected, the existing codes applied to genuine products may be changed so that any ongoing investigation work by a forger to identify the current security protocol is immediately undermined. A key benefit of the present invention is, therefore, its ability to adapt and modify the security marker through the selection of alternative colour pigments, inks, dyes or other materials that have new spectral characteristics for the same or and entirely new combinations of incident irradiating narrowband wavelengths. Furthermore, if the scanner software is updated with a new detection protocol, older out-of-date products having an expired security marker can be filtered out of the system at the point of sale or distribution, especially since the level of confidence arising from the system of the present invention is considerably higher than with existing barcode technologies. Executable program code for the scanner is therefore sensitive and access thereto may be restricted, or made subject to encryption technologies, as will be understood by the skilled addressee.

By way of a practical example, if we consider the distribution of banknotes or pharmaceuticals, the use of the coding scheme [as applied to the note, package or capsule (subject to any regulatory approval arising from the chemistry of the marker dye, ink, yeast or pigment)] provides for an ability to filter out fakes at the point of distribution to the general public or the point of receipt into a central collection point. For example, a cash-dispensing (ATM) machine may include a scanner that quickly filters legitimate notes from forgeries, with the scanner sensitized only to newer series notes or new batches pharmaceutical products delivered after an agreed start date. This initially de-sensitized approach allows for immediate introduction of the system of the present invention and immediate effect. At a point of sale (POS), the existing scanning laser may itself be sufficient to cause the generation of a meaningful spectral response as detected by a CCD in the cash register, subject-to the cash-register being programmed to look for the presence of spectral signatures in notes passed in from its imaging screen.

FIGs. 6a and 6b in combination describe a flow diagram 600 of a process for generating, applying and authenticating a code marker, the process and code marker in accordance with preferred embodiments of the present invention.

The process begins with the selection 602 of coloured features (e.g. pigments, pantones, dyes, inks, etc.) to generate a unique marker 700. At 602, a determination 604 is made regarding the spectral characteristics/signature of the coloured features and marker (in general) under controlled incident illumination. A spectral signature can then be generated and recorded 606 in a secure and preferably encrypted format in a database. Access to the spectral signature(s) is therefore controlled since this offers a key to the employed security coding scheme.

The marker is then applied or otherwise integrated to/in an article or product (including multiple times, in appropriate, to the product and its packaging or component parts), with cross-referencing 608 of the product of the marker's unique spectral signature stored in a database. The article can then be shipped or otherwise distributed 610.

At some future point, e.g. at a point of sale, the coded security marker on the article is scanned 612 with first incident narrowband electromagnetic wavelengths (generally in the visible or near visible range). Spectral characteristics from the coloured features are collated 614 for the initial narrowband wavelength.

At step 616, the processing engine (or more particularly the control software) determines whether the scanner has stepped through the wavelengths made available by the LED array. In the negative 618, a change in the narrowband source is made and the coded security marker illuminated 620 with the next source in sequence, whereafter spectral characteristics are again collated (with a return to process step 614). An affirmative path 622 from decision stage 616 leads to the preparation 624 of a composite spectral signature from individual collated spectral characteristics.

By referencing a database (which may be remote to the processing engine or otherwise stored locally in memory (reference numeral 201 of FIG.2), the reference spectral signature (prepared in step 604) for the product is recovered 626, and then a comparison 630 undertaken with the acquired composite spectral signature to see whether a match exists or where an acceptable match exists from statistically acceptable similarities arising between the spectral signature produced under test and the expected spectral signature stored as the reference. In the affirmative 632, the article contains a valid and recognized security code, with the article therefore acceptable 634 for storage, use, receipt of sale. The fact that the article has been authenticated may, optionally, be recorded and/or reported to the original equipment manufacturer (or supplier, "OEM"). In the event that no match is determined or a level of confidence in the result raises the possibility that the security marker is not related to the product to which it is applied to attached (path 638), the article is rejected or refused 640 as being suspect or fake, whereafter the article can be removed from circulation (e.g. confiscated) and the OEM accordingly notified. 642. Tracking, tracing and filtering of articles is therefore made possible by the coded security marker and scanner of the various embodiments of the present invention.

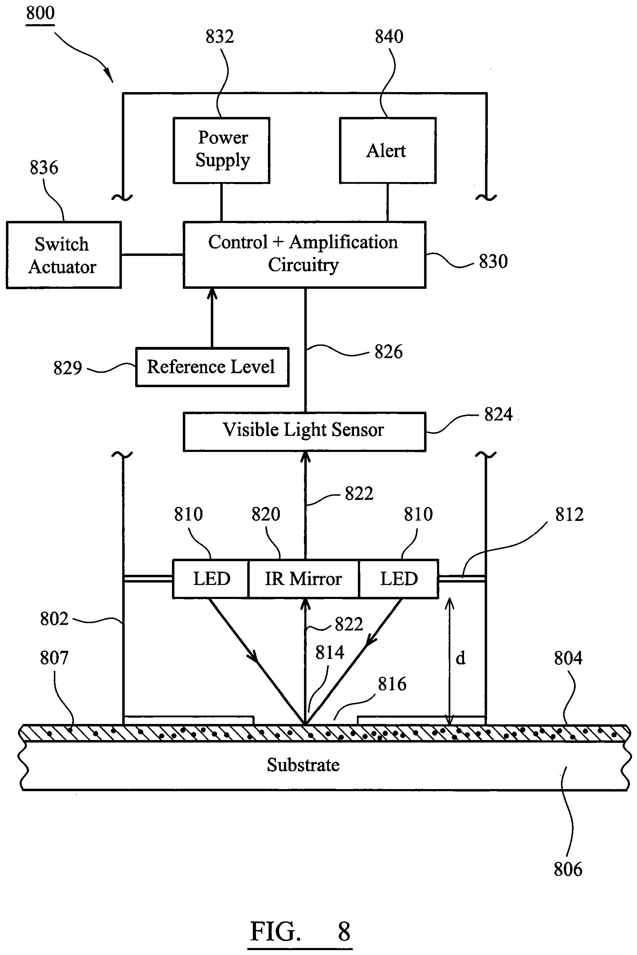

FIG. 8 is a schematic diagram of a preferred handheld detector device 800 for authenticating the presence of a covertly applied colour marker. The device includes a housing 802 that, in use, abuts against a surface finish 804, such as a plastic coating, securely applied to a substrate 806. The substrate 806 may be a banknote or an article of commerce. The surface finish 804, which may be a localized region or a total covering, is impregnated with a pigment or compound 807. Impregnation or doping is typically around 1% by weight or lower and depends upon detector sensitivity; this will be described below.

Suitable pigments and compounds are known in the art and sourceable from specialist suppliers affiliated, for example, with the British Coatings Federation, e.g. Luminescence International Limited of Harlow. The properties of the pigment are that, when illuminated in the near infra-red, an optical response is provided at visible wavelengths in the electromagnetic spectrum. The optical response is typically a narrowband response having a spectral response that is less than about ten nanometers in width. The optical response may have one or more spectral peaks. It is simply important that there is at least one optical response in the visible spectrum between about 390nm and 700nm. The surface finish 804 therefore acts as a security feature.

Returning to FIG. 8, an array of LEDs 801 is positioned within a frame 812 fixed within the housing 802. The array of LEDs 810 may include any number of LEDs, although a preferred embodiment makes use of LEDs positioned at equally spaced quarter points around the frame 812. Each of the LEDs is focused at a focal point 814 at a distance d from the frame 812. The focal point 814 is typically aligned relative to an aperture 816 of the housing 802 so that the surface finish 804 is on the focal plane for reasons of obtaining maximum reflection (or light transmission) from the surface finish 804. Use of an array, rather than a point source, provides for more effective illumination of the surface finish and generally a greater spot focus (rather than an analysis point focus) at the focal point.

The frame 812 also includes a central IR mirror 820. The IR mirror 820 acts as a visible wavelength bandpass filter so that visible light 822 emanating from the surface finish 804 (upon selective illumination by the LEDs 810) is passed through the IR mirror 820 to fall incident on a visible light sensor 824. The LEDs, as will now be appreciated, emit a spectrum of electromagnetic wavelengths of which some interact with the pigment or compound 807 to provide a visible wavelength. More specifically, the LEDs emit trigger frequencies that are, in a preferred embodiment, typically in the short IR-range of wavelengths (although other trigger frequencies can be used provided that they tie to the security pigment's output frequencies). The IR mirror 820 can be made more frequency selective (such as through the use of a filter coating) to further limit transmission of light therethrough, but this adds to expense of th detector device 800.

The visible light sensor 824 is configured to provide an output signal 826 that reflects overall visible light intensity, i.e. to reduce cost and complexity the visible light sensor 824 can make a determination of an absolute level of its illumination. Alternatively, the visible light sensor 824 could otherwise look to identify light intensities at specific identified frequencies. The output signal 826 is typically subjected to amplification and signal processing to produce a viable test signal. Amplification and signal processing is preferably performed within the detector device 800 on a PCB that may include a microprocessor, some logic devices and amplification circuitry and collectively referred to as "control and amplification circuitry 830". An amplified version of the output signal is then contrasted against a reference threshold level 829. Comparison could be achieved in a comparator circuit with reference to a discrete level attributed to the detected light intensity, but alternatively comparison could make use digital values contrasted within a suitably configured microprocessor. Given that many comparison techniques are well known to the skilled addressee, reference to a "comparator" includes all functionally equivalent devices that operate on signals in either the analog or digital signal domains.

The detector device 800 receives power from a power supply 832, which may be an internal battery or otherwise a link to an external supply. The power supply also provides energy to the array of LEDs 810. The detector device 800 also includes a switch actuator 836 that, one depressed or otherwise selected, regulates the supply of energy to the array of LEDs 810.

The detector device 800 may also include an audible and/or visual alert 840, such as a speaker and/or a dual colour LED or the like. The alert 840 may, in fact, have two functions: i) to indicate that the array of LEDs 812 is energized and emitting trigger wavelengths; and ii) to provide a user-perceivable sensory output indicating that the reference threshold level 829 has been exceeded by the visible light incident on the visible light sensor 824. For example, with a two colour LED, the LED could be made to glow red when the LEDs are emitting wavelengths, but would change to glow green in the event that visible light incident collected by the visible light sensor 824 registered as being significant. In this context, "significant" means that the determined light intensity is above the reference threshold level 829 that is pre-set to indicate the presence of the security pigment or security compound 807 in the applied surface coating 804).

The detector device 800 therefore provides an effective way of determining the authenticity of an article of commerce and the like, with the authenticity established by the application of the surface finish 804 containing a covert security marker having particular known optical trigger and optical response properties. In this sense "known" means unknown to the general public, but known to either the security firm applying security tags or a bona fide, i.e. original, manufacturer, supplier or distributor of the article of commerce to which the security marker has been applied. The security marker, whether in the form of a complete surface finish or a non-removable label, therefore provides a mechanism for authenticating the goods.

It will, of course, be appreciated that the above description has been given by way of example only and that modifications in detail may be made within the scope of the invention. For example, whilst a preferred embodiment refers and shows a bar code, the coding scheme of the present invention may, in fact, be worked overtly or covertly into any image, including a picture or a HCCB.

In the specification, the term "article of commerce" should therefore be construed broadly to include packaging, an article or component part thereof or even a banknote. The terms are therefore freely interchangeable unless the specific context of the description suggests otherwise, although it is noted that the specific context is in itself exemplary of a typical application that could benefit from the various aspects of the present invention. Similarly, the terms "spectral signature" and "spectral characteristic" and "spectral response" relate to derivable properties of the coding scheme under examination at selected wavelengths and so, unless the context requires a more limited meaning, are generally synonymous.

The preferred embodiments of the present invention therefore find application across a diverse range of commercial applications and environments, including point-of-sale ("POS") and centralized filtering environments for money and articles of commerce or value, including (but not limited to) applications to drug packaging and pharmaceuticals, perfumes, mechanical (spare) parts, shrink-wrapped software, electronic components and tickets or certificates, such as educational qualifications. In a pharmaceutical environment, different spectral signatures arising from different inks and dyes could, furthermore, be applied by different parties within the chain of distribution such that a characteristic base code was present on all labels from a particular manufacturer, with other colour features providing, for example, validation for dates and/or manufacturing locations and/or countries of destination, etc.

The relatively small size of the scanner and its ability to cooperate with existing microprocessors in existing portable equipment mean that the system of the present invention can be made available at low cost and used in high throughput environments, such as ticket turnstiles where high-speed authentication is required

While a preferred embodiment references the use of a cameraphone, it will be understood that this is merely reflective of off-the-shelf technology that may be used as an image processing backbone. Therefore, the term cameraphone is interchangeable to other forms of devices containing CCD displays (or the like), including discrete or custom-built devices and other technologies, such as PDAs.

It will be understood that unless features in any of the particular preferred embodiments are expressly identified as incompatible with one another or the surrounding context implies that they are mutually exclusive and not readily combinable in a complementary and/or supportive sense, the totality of this disclosure contemplates and envisions that specific features of those complementary embodiments can be selectively combined to provide one or more comprehensive, but slightly different, technical solutions.

## Claims

1. A colour-coded security marker (700) containing a plurality of preselected colour features (704a-704d) having known and preselected spectral characteristics (108a-108c) knowingly discernible under incident narrowband electromagnetic wavelengths (104) selected from a range between about middle/near ultraviolet to about near infra-red, the spectral characteristics producing unique and known spectral signatures knowingly attributed to the colour-coded security marker.

2. The colour-coded security marker according to claim 1, wherein the colour features (704a-704d) are formed from one of:
i) one or more pantone inks;
ii) one or more fluorescing agents not prone to replication using RGB and CMYK printing processes; and
iii) a combination of one or more pantone inks and one or more fluorescing agents not prone to replication using RGB and CMYK printing processes.

3. The colour-coded security marker according to claim 1, wherein the colour features (704a-704d) are formed from one or more:
i) pigments not prone to replication using RGB and CMYK printing processes;
ii) dyes not prone to replication using RGB and CMYK printing processes;
iii) organic or inorganic coating not prone to replication using RGB and CMYK printing processes;
iv) coloured species from natural sources that are coloured or can be made to change colour.

4. An article of manufacture including the colour-coded security marker of any preceding claim.

5. The article of manufacture of claim 4, wherein the colour-coded security marker is formed on a substrate selected from the group consisting of:
plastic-coated UV dull paper;
plastic film;
paper; and
an adhesive label.

6. The article of manufacture of claim 4, wherein the article is selected from the group consisting of:
a foodstuff;
a pharmaceutical;
perfume;
a mechanical part;
shrink-wrapped software;
an electronic components;
a ticket;
objet d'art;
a banknote;
a certificate;
packaging or labelling applied to the article of manufacture.

7. A method (600) of coding and authenticating an article of manufacture, the method comprising:
coding (608) the article (230) and/or its packaging with the multicolour-coded security marker (700) according to claim 1 and realizing, upon selected illumination, a plurality of spectral signatures;
using a succession of selected narrowband electromagnetic wavelengths (104) selected from a range between about middle/near ultraviolet to about near infra-red to illuminate (612) the multicolour-coded security marker in an attempt to produce the plurality of spectral signatures
recovering a plurality of resultant spectral characteristics arising from illumination of the multicolour-coded security marker by the succession of selected narrowband electromagnetic wavelengths ;
comparing (628) the plurality of resultant spectral signatures with references for the plurality of spectral signatures; and
generating (640, 642) an alert in circumstances where the comparison yields (638) statistically significant dissimilarities between the plurality of resultant spectral signatures and the plurality of spectral signatures.

8. The method of claim 7, wherein a subset of the selected narrowband electromagnetic wavelengths are used to generate the second spectral signature.

9. The method of claim 7, further comprising:
comparing colours introduced or changed by application of a physical stimulus.

10. The method of claim 7, further comprising:
comparing colours introduced or changed by chemical stimuli.

11. An optoelectronic scanner system (200) for scanning the colour-coded security marker of claim 1, comprising:
an array (218) of multiple narrowband electromagnetic sources arranged to produce, on a time-controlled basis, a plurality of narrowband electromagnetic wavelengths (104) selected from a range between about middle/near ultraviolet to about near infra-red;
a lens system (210) cooperating with the array (218) of multiple narrowband electromagnetic sources and arranged to capture spectral response characteristics.

12. The optoelectronic scanner system (200) of claim 11, further comprising:
an image capturing device (202) at a point of focus of the lens system, the point of focus being behind or alongside the array, the image capturing device compiling the spectral response characteristics from photons emitted from the array on the time-controlled basis and as reflected, in operation and via the lens system (210), from a surface of a sample containing a colour-coded marker.

13. The optoelectronic scanner system according to claim 11 or 12, further coupled to a processing engine (201) arranged or configured to activate each of the sources in the array on said time-controlled basis and to assembly a spectral signature from spectral response characteristics of selected ones of the plurality of narrowband electromagnetic wavelengths.

14. The optoelectronic scanner system according to claim 13, wherein the processing engine is configured or arranged to undertake a comparison of the spectral signature with a reference spectral signature and to generate an alert in the event that the comparison yields (638) a statistically significant result between the spectral signature and the reference spectral signature.

15. A detector (800) for detecting the colour-coded security marker according to claim 1 the handheld detector (800) comprising:
an array (810) of multiple LED sources arranged to produce, upon selective energization, triggering electromagnetic wavelengths in about the near infra-red range, the triggering electromagnetic wavelengths focused near an aperture (816) of the detector (800);
an IR mirror (820) mounted in the detector (800) and held inboard of the array (810) of multiple LED sources, the IR mirror mounted in-line with the aperture (816) and in a reflected wavepath, the IR mirror configured to transmit visible wavelengths (822) therethrough and to block triggering electromagnetic wavelengths falling incident thereon; and
a visible light detector (824) configured to detect light intensity for visible wavelengths falling incident thereon, the visible light detector (824) positioned in the reflected wavepath and behind the IP mirror with respect to the aperture (816), the light detector providing an output representative of said detected incident visible light intensity;
a comparator for comparing said output representative of said detected incident visible light intensity with a predetermined threshold light intensity level, the comparator configured to generate a comparison output; and
an alert, responsive to the comparison output, for generating a sensory perceivable alert relating to at least one of the presence or absence of the security marker as determined by the presence or absence of visible wavelengths generated in timely response to triggering electromagnetic wavelengths produced from the array; and
wherein the visible light detector (824) is configured to detect specific spectral characteristics.

## Patentansprüche

1. Farbcodierte Sicherheitsmarkierung (700), umfassend eine Mehrzahl von vorbestimmten Farbmerkmalen (704a - 704d), die bekannte und vorbestimmte Spektraleigenschaften (108a - 108c) aufweisen, die unter einfallenden schmalbandigen elektromagnetischen Wellenlängen (104) aus einem Bereich zwischen etwa mittlerem/nahem Ultraviolett und etwa nahem Infrarot erkennbar sind, wlssentlich ausgewählt sind, wobei die Spektraleigenschaften eine einzigartige und bekannte spektrale Signatur erzeugen, die der farbcodierten Sicherheitsmarkierung wissentlich zugeordnet ist.

2. Codierte Sicherheitsmarkierung nach Anspruch 1, wobei die Farbmerkmale (704a - 704d) gebildet sind aus entweder/oder:
i) einer oder mehreren Pantonefarben;
ii) einer oder mehreren fluoreszierenden Substanzen, welche vor der Replikation mit RGB- und CMYK-Druckverfahren sicher sind;
iii) einer Kombination von einer oder mehrerer Pantonefarben und einer oder mehrerer fluoreszierenden Substanzen, die vor der Replikation unter Verwendung von RGB- und CMYK-Druckverfahren sicher sind.

3. Codierte Sicherheitsmarkierung nach Anspruch 1, wobei die Farbmerkmale (704a - 704d) gebildet sind aus und/oder:
i) Pigmenten, die vor der Replikation unter Verwendung von RGB- und CMYK-Druckverfahren sicher sind;
ii) Farbstoffen, die vor der Replikation mittels RGB- und CMYK-Druckprozessen sicher sind;
iii) organischer oder anorganischer Beschichtungen, die vor der Replikation mit RGB- und CMYK-Druckverfahren sicher ist;
iv) farbigen Substanzen aus natürlichen Quellen, die gefärbt sind oder behandelt werden können, um die Farbe zu ändern.

4. Herstellungsgegenstand mit der codierten Sicherheitsmarkierung nach einem der vorhergehenden Ansprüche.

5. Herstellungsgegenstand nach Anspruch 4, wobei die farbcodierte Sicherheitsmarkierung auf einem Substrat gebildet ist, welches aus der Gruppe ausgewählt ist, bestehend aus:
kunststoffbeschichtetem mattem UV Papier;
Kunststofffolie;
Papier; und
einem Klebeetikett,

6. Herstellungsgegenstand nach Anspruch 4, wobei der Gegenstand ausgewählt ist aus der Gruppe bestehend aus:
einem Lebensmittel;
einem Pharmazeutikum;
Parfüm;
einem mechanischem Teil;
eingeschweisster Software;
einem elektronischen Bauteil;
einem Ticket;
einem Kunstgegenstand;
einer Banknote;
einem Zertifikat;
auf dem Herstellungsgegenstand aufgebrachte Verpackung oder Etikettierung.

7. Ein Verfahren (600) zum Codieren und Authentifizieren eines Herstellungsgegenstandes, wobei das Verfahren umfasst:
Codieren (608) des Gegenstandes (230) und/oder seiner Verpackung mit der mehrfarbig codierten Sicherheitsmarkierung (700) gemäss Anspruch 1 und
Erfassen, nach ausgewählter Beleuchtung, einer Mehrzahl von spektralen Signaturen;
Verwenden einer Abfolge ausgewählter schmalbandiger elektromagnetischer Wellenlängen (104), welche aus einem Bereich zwischen etwa mittlerem/nahem Ultraviolett bis etwa nahem Infrarot ausgewählt sind, um die mehrfarbig codierte Sicherheitsmarkierung zu beleuchten (612), im Bestreben die Mehrzahl von spektralen Signaturen zu erzeugen;
Rückgewinnen einer Mehrzahl resultierender Spektraleigenschaften, welche bei der Beleuchtung der mehrfarbig codierten Sicherheitsmarkierung mit der Abfolge ausgewählter schmalbandiger elektromagnetischer Wellenlängen auftreten;
Vergleichen (628) der Mehrzahl der resultierenden spektralen Signaturen mit Referenzen der Mehrzahl der spektralen Signaturen; und
Generieren (640, 642) eines Alarmsignals falls die Vergleiche statistisch signifikante Abweichungen zwischen der Mehrheit der resultierenden spektralen Signaturen und der Mehrheit der spektralen Signaturen ergeben (638).

8. Verfahren nach Anspruch 7, wobei eine Untermenge der ausgewählten schmalbandigen elektromagnetischen Wellenlängen verwendet wird, um die zweite spektrale Signatur zu erzeugen.

9. Verfahren nach Anspruch 7, ferner umfassend:
Vergleichen von Farben, die durch Anwendung eines physikalischen Reizes erlangt oder geändert wurden.

10. Verfahren nach Anspruch 7, ferner umfassend:
Vergleichen von Farben, die durch chemische Reize erlangt oder verändert wurden.

11. Opto-elektronisches Scannersystem (200) zum Scannen der farbcodierten Sicherheitsmarkierung gemäss Anspruch 1, umfassend:
ein Array (218) aus mehreren schmalbandigen elektromagnetischen Quellen, die so aufgebaut sind, dass sie, auf einer zeitgesteuerter Basis, eine Mehrzahl von schmalbandigen elektromagnetischen Wellenlängen (104), die aus einem Bereich zwischen etwa mittlerem/nahem Ultraviolett bis etwa nahem Infrarot, erzeugen;
ein Linsensystem (210), das mit dem Array (218) von mehreren schmalbandigen elektromagnetischen Quellen zusammenwirkt und aufgebaut Ist, um das spektrale Ansprechverhalten zu erfassen.

12. Opto-elektronisches Scannersystem (200) nach Anspruch 11, ferner umfassend:
eine Bilderfassungsvorrichtung (202) im Fokus des Linsensystems, wobei der Fokus hinter oder neben dem Array liegt, wobei die Bilderfassungsvorrichtung das spektrale Ansprechverhalten aus den vom Array auf der zeitgesteuerten Basis emittierten und aus den, bei Betrieb und über das Linsensystem (210), von einer Oberfläche einer Probe, die eine farbcodierte Markierung aufweist, reflektierten Photonen, kompiliert.

13. Opto-elektronisches Scannersystem nach Anspruch 11 oder 12, welches ferner mit einer Verarbeitungsmaschine (201) gekoppelt ist, die aufgebaut und konfiguriert ist, um jede der Quellen in dem Array auf der zeitgesteuerten Basis zu aktivierten und um aus den spektralen Ansprechverhalten, aus der Mehrzahl ausgewählter, schmalbandiger elektromagnetischer Wellenlängen, eine spektrale Signatur zusammenzusetzen.

14. Opto-elektronisches Scannersystem nach Anspruch 13, wobei die Verarbeitungsmaschine konfiguriert oder aufgebaut ist, um einen Vergleich der spektralen Signatur mit einer spektralen Referenzsignatur durchzuführen und um ein Alarmsignal zu erzeugen, falls der Vergleich (638) zwischen der spektralen Signatur und der spektralen Referenzsignatur ein statistisch signifikantes Resultat ergibt.

15. Ein Detektor (800) zum Erfassen der Sicherheitsmarkierung gemäss Anspruch 1, wobei der handgehaltene Detektor (800) umfasst:
ein Array (810) mit mehreren LED-Quellen, die aufgebaut sind, um, bei selektiver Ansteuerung, anregende elektromagnetische Wellenlängen in etwa dem nahen Infrarotbereich zu erzeugen, wobei die anregenden elektromagnetischen Wellenlängen nahe einer Apertur (816) des Detektors (800) fokussiert werden;
einen IR-Spiegel (820), der in dem Detektor (800) angebracht ist und innerhalb des Array (810) mit den mehrerer LED-Quellen gehalten wird, wobei der IR-Spiegel in der Ebene der Apertur (816) und in einem reflektierten Strahlengang angeordnet ist, wobei der IR-Spiegel konfiguriert ist, um sichtbare Wellenlängen (822) durchzulassen und um auftreffende, anregende elektromagnetische Wellenlängen abzublocken; und
einen Sichtbar-Licht-Detektor (824), der konfiguriert Ist, um die Lichtintensität von auftreffenden Wellenlängen zu detektieren, wobei der Sichtbar-Licht-Detektor (824) in dem reflektierten Strahlengang und in Bezug auf die Blende (816) hinter dem IP-Spiegel positioniert ist, wobei der Licht-Detektor ein Ausgangssignal, welches die detektierte einfallende Sichtbar-Licht-Intensität repräsentiert, erzeugt;
einen Komparator um dieses Ausgangssignals, das diese detektierte einfallende Sichtbar-Licht-Intensität repräsentiert, mit einem vorbestimmten Schwellen-Lichtintensitätspegel zu Vergleichen, wobei der Komparator konfiguriert ist, um ein Vergleichs-Ausgangssignal zu erzeugen; und
einen Alarmgeber, der auf das Vergleichs-Ausgangssignal anspricht, um ein sensorisch wahrnehmbare Warnsignal zu erzeugen, das sich mindestens auf die An- oder Abwesenheit der Sicherheitsmarkierung bezieht, wie sie durch die An- oder Abwesenheit von sichtbaren Wellenlängen bestimmt wird, welche in zeitgerechter Reaktion auf die vom Array erzeugten anregenden elektromagnetischen Wellenlängen generiert werden; und
wobei der Sichtbar-Licht-Detektor (824) konfiguriert ist, um spezifische spektrale Eigenschaften zu detektieren.

## Revendications

1. Marqueur de sécurité codé par couleur (700) contenant une pluralité de caractéristiques de couleur présélectionnées (704a-704d) présentant des caractéristiques spectrales connues (108a-108c) clairement reconnaissables à des longueurs d'onde électromagnétiques incidentes de spectre étroit (104) choisies dans une plage comprise entre environ l'ultraviolet proche/moyen et environ l'infrarouge proche, les caractéristiques spectrales produisant des signatures spectrales uniques et connues clairement attribuées au marqueur de sécurité codé par couleur.

2. Marqueur de sécurité codé par couleur (700) selon la revendication 1, selon lequel les caractéristiques de couleur (704a-704d) sont constituées d'un élément parmi les suivants :
(i) une ou plusieurs encres Pantone ;
(ii) un ou plusieurs agents fluorescents insensibles à la réplication mettant en oeuvre des procédés d'impression RGB et CMYK ; et
(iii) une combinaison d'une ou plusieurs encres Pantone et un ou plusieurs agents fluorescentes insensibles à la réplication mettant en oeuvre des procédés d'impression RGB et CMYK.

3. Marqueur de sécurité codé par couleur (700) selon la revendication 1, selon lequel les caractéristiques de couleur (704a-704d) sont constituées d'un ou plusieurs éléments parmi les suivants :
(i) des pigments insensibles à la réplication mettant en oeuvre des procédés d'impression RGB et CMYK ;
(ii) des colorants insensibles à la réplication mettant en oeuvre des procédés d'impression RGB et CMYK ;
(iii) un revêtement organique ou inorganique insensible à la réplication mettant en oeuvre des procédés d'impression RGB et CMYK ;
(iv) des espèces colorées d'origine naturelle qui sont colorées ou que l'on peut faire changer de couleur.

4. Article de manufacture incorporant le marqueur de sécurité codé par couleur selon l'une quelconque des revendications précédentes.

5. Article de manufacture selon la revendication 4, selon lequel le marqueur de sécurité codé par couleur est formé sur un substrat choisi dans le groupe consistant en :
du papier mat UV revêtu de matière plastique ;
un film de matière plastique ;
du papier; et
une étiquette adhésive.

6. Article de manufacture selon la revendication 4, selon lequel l'article est choisi dans le groupe consistant en :
un produit alimentaire;
un produit pharmaceutique ;
un parfum ;
une pièce mécanique ;
un logiciel conditionné sous emballage plastique à retrait ;
des composants électroniques ;
un billet ;
un objet d'art ;
un billet de banque ;
un certificat ;
un emballage ou un étiquetage appliqué à la surface de l'article de manufacture.

7. Méthode (600) d'encodage et d'authentification d'un article de manufacture, la méthode comprenant :
l'encodage (608) de l'article (230) et/ou de son emballage avec le marqueur de sécurité codé par couleurs multiples (700) selon la revendication 1, et
la production, lors d'un éclairage sélectif, d'une pluralité de signatures spectrales ;
l'utilisation d'une suite de longueurs d'onde électromagnétiques à spectre étroit (104) choisies dans une plage comprise entre environ l'ultraviolet proche/moyen et environ l'infrarouge proche pour éclairer (612) le marqueur de sécurité codé par couleurs multiples, pour tenter de produire la pluralité de signatures spectrales ;
la récupération d'une pluralité de caractéristiques spectrales résultantes produite par l'éclairage du marqueur de sécurité codé par couleurs multiples par application de la suite de longueurs d'onde électromagnétiques à spectre étroit ;
la comparaison (628) de la pluralité de signatures spectrales résultantes avec des références pour la pluralité de signatures spectrales ; et
la génération (640,642) d'une alerte dans des circonstances telles que la comparaison entre la pluralité de signatures spectrales résultantes avec la pluralité de signatures spectrales fournit (638) des différences statistiquement significatives.

8. Méthode selon la revendication 7, selon laquelle un sous-ensemble des longueurs d'onde électromagnétiques à spectre étroit choisies est utilisé pour générer la seconde signature spectrale.

9. Méthode selon la revendication 7, comprenant en outre la comparaison des couleurs introduites ou modifiées par application d'un stimulus physique.

10. Méthode selon la revendication 7, comprenant en outre la comparaison des couleurs introduites ou modifiées par application d'un stimulus chimique.

11. Système de reconnaissance optoélectronique pour la reconnaissance du marqueur de sécurité codé par couleur selon la revendication 1 comprenant :
un réseau (218) de sources multiples de longueurs d'ondes électromagnétiques à spectre étroit disposé pour produire, en fonction du passage de temps, une pluralité de longueurs d'onde électromagnétiques de spectre étroit (104) choisies dans une plage comprise entre environ l'ultraviolet proche/moyen et environ l'infrarouge proche ;
un système à lentilles (210) coopérant avec le réseau (218) de sources multiples de longueurs d'ondes électromagnétiques à spectre étroit et disposé pour capter des caractéristiques de réponse spectrale.

12. Système de reconnaissance optoélectronique (200) selon la revendication 11, comprenant en outre :
un dispositif de capture d'image (202) situé à un point focal du système à lentilles, le point focal se situant derrière ou le long du réseau, le dispositif de capture d'images compilant les caractéristiques de réponse spectrale provenant de photons émis par le réseau en fonction du passage de temps, et tels que réfléchis, lors de son fonctionnement et via le système à lentilles (210), depuis une surface d'un échantillon contenant un marqueur codé par couleur.

13. Système de reconnaissance optoélectronique (200) selon la revendication 11 ou la revendication 12, lequel est en outre couplé à un moteur de traitement (201) disposé ou configuré pour activer chacune des sources du réseau en fonction du passage de temps et pour assembleur une signature spectrale à partir de caractéristiques de réponse spectrales de longueurs d'ondes choisies dans la pluralité de longueurs d'ondes électromagnétiques à spectre étroit.

14. Système de reconnaissance optoélectronique (200) selon la revendication 13, selon lequel le moteur de traitement est configuré ou disposé pour effectuer une comparaison de la signature spectrale avec une signature spectrale de référence et de générer une alerte dans le cas où la comparaison fournit (638) un résultat statistiquement significatif entre la signature spectrale et la signature spectrale de référence.

15. Capteur (800) pour la détection du marqueur de sécurité codé par couleur selon la revendication 1, le capteur portatif se tenant dans la main (800) comprenant :
un réseau (810) de sources multiples à diode électroluminescente (DEL) disposé pour produire, lors d'une alimentation sélective en énergie, des longueurs d'onde électromagnétiques à déclenchement dans la plage de l'infrarouge proche, les longueurs d'onde électromagnétiques à déclenchement étant focalisées près d'une ouverture (816) du capteur (800) ;
un miroir à infrarouge (820) disposé dans le capteur (800) et tenu à l'écart du réseau (810) de sources multiples à diode électroluminescente (DEL), le miroir à infrarouge étant disposé en alignement avec l'ouverture (816) et dans un chemin optique de réflexion, le miroir à infrarouge étant configuré pour permettre le passage des longueurs d'ondes de lumière visible (822) à travers le miroir, et de bloquer les longueurs d'onde électromagnétiques à déclenchement incidentes sur ce denier ; et
un capteur de lumière visible (824) configuré pour détecter l'intensité de la lumière pour longueurs d'onde de lumière visible incidentes sur sur celui-ci, le capteur de lumière visible (824) étant positionné dans le chemin optique de réflexion et derrière le miroir à infrarouge par rapport à l'ouverture (816), le capteur de lumière fournissant une sortie représentative de l'intensité de la lumière visible incidente détectée ;
un comparateur pour effectuer la comparaison de ladite intensité de lumière visible incidente détectée avec un niveau d'intensité seuil prédéterminé de lumière, le comparateur étant configuré pour générer une sortie de comparaison ; et
une alerte, en réponse à la sortie de comparaison, pour générer une alerte sensorielle perceptible relative à au moins la présence ou l'absence du marqueur de sécurité tel que déterminée par la présence ou l'absence de longueurs d'onde visibles générées dans un laps de temps approprié par les longueurs d'onde électromagnétiques à déclenchement produites par le réseau , et
selon lequel le capteur de lumière visible (824) est configuré pour détecter des caractéristiques spectrales spécifiques.
